Europäisches Patentamt

European Patent Office

Office européen des brevets

(19)

(11) **EP 1 042 386 B1**

(12) **EUROPÄISCHE PATENTSCHRIFT**

(45) Veröffentlichungstag und Bekanntmachung des Hinweises auf die Patenterteilung:
**17.07.2002 Patentblatt 2002/29**

(21) Anmeldenummer: **98966284.6**

(22) Anmeldetag: **10.12.1998**

(51) Int Cl.[7]: **C08G 18/66**

(86) Internationale Anmeldenummer:
**PCT/EP98/08043**

(87) Internationale Veröffentlichungsnummer:
**WO 99/33895 (08.07.1999 Gazette 1999/27)**

(54) **ALIPHATISCHE, EMISSIONSARME, SINTERFÄHIGE THERMOPLASTISCHE POLYURETHANFORMMASSEN**

ALIPHATIC, LOW-EMISSION THERMOPLASTIC POLYURETHANE MOULDING MATERIALS SUITABLE FOR SINTERING

MATIERES MOULABLES EN POLYURETHANE THERMOPLASTIQUES, ALIPHATIQUES, FRITTABLES ET PEU POLLUANTES

(84) Benannte Vertragsstaaten:
**BE DE ES FR GB IT NL PT SE**

(30) Priorität: **23.12.1997 DE 19757569**

(43) Veröffentlichungstag der Anmeldung:
**11.10.2000 Patentblatt 2000/41**

(73) Patentinhaber:
• **BAYER AG**
**51368 Leverkusen (DE)**
• **Benecke-Kaliko Aktiengesellschaft**
**D-30419 Hannover (DE)**

(72) Erfinder:
• **KAUFHOLD, Wolfgang**
**D-51061 Köln (DE)**

• **HOPPE, Hans-Georg**
**D-42799 Leichlingen (DE)**
• **HEIDINGSFELD, Herbert**
**D-50226 Frechen (DE)**
• **OHLINGER, Rainer**
**D-30519 Hannover (DE)**
• **KALBE, Michael**
**D-64969 Weinheim (DE)**

(56) Entgegenhaltungen:
DE-A- 2 658 136          DE-A- 4 209 709
DE-C- 4 203 307          US-A- 4 174 436
US-A- 5 695 884

EP 1 042 386 B1

**Beschreibung**

Es werden zur Herstellung genarbter Sinterfolien geeignete thermoplastisch in Form von Sinterpulver verarbeitbare Polyurethanformmassen beschrieben, die ausschließlich aus linearen, aliphatischen Komponenten hergestellt werden. Die Polyolkomponente setzt sich zusammen aus 30 bis 80 Gewichtsteilen eines aliphatischen Polycarbonatdiols mit einem mittleren Molekulargewicht $\overline{M}_n$ von 1000 bis 2200 und 70 bis 20 Gewichtsteilen eines Polybutandioladipats und/oder eines Polycaprolactondiols mit einem mittleren Molekulargewicht $\overline{M}_n$ von 1000 bis 2400. Ferner enthält die Mischung 1,6-Hexamethylendiisocyanat in einem Äquivalenzverhältnis von 2,3 : 1,0 bis 6,2 : 1,0 bezogen auf das Polyolgemisch und 1,4-Butandiol als Kettenverlängerungsmittel, wobei das Äquivalenzverhältnis des 1,4-Butandiols bezogen auf das Polygemisch 1,3 : 1,0 bis 5,2 : 1,0 beträgt.

Die NCO-Kennzahl, gebildet aus dem mit 100 multiplizierten Quotienten der Äquivalenzverhältnisse von Isocyanatgruppen und der Summe der Hydroxylgruppen von Polyolen und Kettenverlängerer beträgt 96 bis 99.

Genarbte Sinterfolien werden zur Oberflächenverkleidung von Armaturentafeln in Kraftfahrzeugen verwendet und wurden bisher aus Polyvinylchlorid hergestellt, dessen Chlorgehalt und Schwermetallanteil sowie dessen Weichmachergehalt Probleme beim Recycling und beim Einsatz im Kaftfahrzeug aufwerfen. Bekannt ist z.B. das Ausgasen von Weichmachern bei Sonnenbestrahlung, was sich in einem lästigen Film auf der Innenseite der Frontscheibe bemerkbar macht.

Die kommerziell erhältlichen, thermoplastischen Polyurethane, die für die Kunstlederfertigung und auch im Extrusions- und Spritzgießverfahren Anwendung finden, sind zwar für eine thermoplastische Verarbeitung nach dem Sinter-Pulver-Verfahren geeignet, aber insbesondere die Licht- und Temperaturstabilität der erhaltenen Folien entsprechen nicht den Anforderungen, die die Automobilindiustrie an Folien für Armaturentafeln stellt.

Aromatische thermoplastische Polyurethane sind aufgrund ihres Aufbaus aus aromatischen Diisocyanaten nicht lichtstabil. Bei hellen Farbeinstellungen entsteht durch Lichteinwirkung eine starke Vergilbung, und selbst bei schwarzen Folien kommt es zu einer Farb- und Glanzgradveränderung.

In der DE-AS 16 94 135 ist ein Verfahren zur Herstellung von vernetzten Polyurethanen aus höhermolekularen, linearen Polyhydroxylverbindungen beschrieben, welche ein Gemisch aus 70 bis 90 Gew.-% Hexandiolpolycarbonat, das durch Umsetzung von 1,6-Hexandiol und Diarylcarbonaten hergestellt worden ist, und das 10 bis 30 Gew.-% Mischpolyester aus u.a. Adipinsäure, 1,6-Hexandiol und 2,2'-Dimethyl-1,3-Propandiol-Diisocyanate und niedermolekularen, mindestens zwei mit Isocyanatgruppen reagierende Wasserstoffatome enthaltenden Kettenverlängerungsmittel, zum Beispiel 1,4-Butandiol, enthält. Es sollen ausschließlich aromatische Diisocyanate eingesetzt werden. Die Vernetzung der Polyurethane wird durch Anwendung eines Überschusses an Diisocyanaten erreicht. Bei aus diesen Ausgangsstoffen hergestellten Polyurethanelastomeren bleibt die durch das Polycarbonat bedingte hohe Hydrolysebeständigkeit erhalten. Darüber hinaus zeigen derartige Elastomere aber auch eine verbesserte Kältefestigkeit und Verarbeitbarkeit gegenüber den Elastomeren, zu deren Herstellung als Polyolkomponente reines 1,6-Hexandiolpolycarbonat eingesetzt wurde. Die bessere Verarbeitbarkeit wirkt sich besonders in der flüssigen Phase - beispielsweise beim Gießverfahren - aus, da die verwendeten Polyester-Polycarbonatgemische bei den Verarbeitungstemperaturen eine niedrigere Viskosität aufweisen als das reine Hexandiolpolycarbonat, weswegen die resultierende Folie leichter blasenfrei vergossen werden kann. Die nach diesem Verfahren hergestellten Produkte können im Maschinen- und Fahrzeugbau eingesetzt werden; über ihren Erweichungsbereich und die Temperaturbeständigkeit ihrer gegebenenfalls profilierten Oberflächen ist nichts ausgesagt.

Aliphatische thermoplastische Polyurethane auf $H_{12}$-MDI-Basis sind zwar lichtecht, aber ihre Temperaturstabilität ist für den Einsatz auf Armaturentafeln in Kraftfahrzeugen nicht ausreichend. Aufgrund starker Sonneneinstrahlung erhitzt sich nämlich der Innenraum von Kraftfahrzeugen hinter der Glasscheibe auf der Armaturentafel bis über 100°C, eine Temperatur, die bereits im Erweichungsbereich dieser Polyurethane liegt. Eine Narbenstabilität bis zu einer Temperatur von 130°C und die Heißlichtstabilität bis 120°C ist mit diesen Materialien nicht erreichbar.

In DE-C 42 03 307 ist eine thermoplastisch in Form von Sinterpulver verarbeitbare Polyurethanformmasse zur Herstellung genarbter Sinterfolien beschrieben, wobei das Pulver ausschließlich aus linearen, aliphatischen Komponenten besteht. Die Polyolkomponente setzt sich zusammen aus 60 bis 80 Gewichtsteilen eines aliphatischen Polycarbonatdiols mit einem Molekulargewicht $\overline{M}_n$ von 2000 und 40 bis 20 Gewichtsteilen eines Polydiols auf Basis Adipinsäure, Hexandiol und Neopentylglykol mit einem Molekulargewicht $\overline{M}_n$ von 2000. Ferner enthält die Mischung 1,6-Hexamethylendiisocyanat in einem Äquivalenzverhältnis von 2,8:1,0 bis 4,2:1,0 bezogen auf das Polyolgemisch und 1,4-Butandiol als Kettenverlängerungsmittel, wobei das Äquivalenzverhältnis des 1,4-Butandiols bezogen auf das Polygemisch 1,3:1,0 bis 3,3:1,0 beträgt. Diese Formmasse hat den Nachteil, daß das Fogging-Verhalten nicht den Richtlinien einiger Automobilhersteller entspricht.

Aus US-A 5 695 884 sind thermoplastische Polyurethanzusammensetzungen bekannt, die aus einem Polyesterpolyol, einem Diol mit niedrigem Molekulargewicht und einem organischen Diisocyanat hergestellt werden. Die Polyurethane werden einer Heißgasbehandlung unterzogen.

Aufgabe der vorliegenden Erfindung war es daher, eine als Sinterpulver thermoplastische verarbeitbare Polyurethanformmasse zu finden, die den Anforderungen der KFZ-Hersteller für Kunststoffe im Armaturenbereich gerecht wird und demnach die folgenden Eigenschaften aufweist:

- Weicher und lederartiger Griff;
- Lichtechtheit, d.h. keine Vergilbung bei Lichteinwirkung und keine Veränderung des Glanzgrades;
- Narbenstabilität bei Temperaturen bis 130°C und Heißlichtstabilität bis 120°C;
- Erweichungsbereich über 140°C;
- scharfer Schmelzpunkt;
- bereits ab dem Schmelzpunkt niedrigviskose Schmelze;
- hohe Zugfestigkeit;
- Einreiß- und Weiterreißfestigkeit;
- geringere Freisetzung niedermolekularer und kondensierbarer Verbindungen als bei Polyurethanformmassen gemäß dem Stand der Technik;
- gute Haftung mit dem Polyurethan-Hintergrundschaum der Instrumententafel-Körper.

Die Aufgabe wird erfindungsgemäß durch die Bereitstellung einer thermoplastischen in Form von Sinterpulver vearbeitbaren Polyurethanformmasse gelöst, die erhalten wird durch Umsetzung von

100 Gewichtsteilen eines Polyolgemisches aus

30 bis 80 Gewichtsteilen eines aliphatischen Polycarbonatdiols mit einem mittleren Molekulargewicht $\overline{M}_n$ von 1000 bis 2200, bevorzugt 1000 bis 2200 und

70 bis 20 Gewichtsteilen eines Polybutandioladipats oder eines Polycaprolactondiols mit einem mittleren Molekulargewicht $\overline{M}_n$ von 1000 bis 2400, bevorzugt 1800 bis 2400 und

1,6-Hexamethylendiisocyanat in einem Äquivalenzverhältnis von 2,3:1,0 bis 6,2:1,0, bezogen auf das Polyolgemisch, und

1,4-Butandiol als Kettenverlängerungsmittel in einem Äquivalenzverhältnis von 1,3:1,0 bis 5,2:1,0, bezogen auf das Polyolgemisch,

wobei die NCO-Kennzahl, gebildet aus dem mit 100 multiplizierten Quotienten der Äquivalenzverhältnisse von Isocyanatgruppen und der Summe der Hydroxylgruppen von Polyolgemisch und Kettenverlängerungsmittel, 96 bis 99 beträgt.

Die Polyurethanformmasse wird ausschließlich aus aliphatischen Komponenten hergestellt, nämlich 100 Gewichtsteilen eines Polyolgemisches aus 30 bis 80 Gewichtsteilen eines aliphatischen Polycarbonatdiols mit einer OH-Zahl von 112,2 bis 51, entsprechend einem mittleren Molekulargewicht $\overline{M}_n$ von 1000 bis 2200, bevorzugt einer OH-Zahl von 62,3 bis 51, entsprechend einem mittleren Molekulargewicht $\overline{M}_n$ von 1800 bis 2200, 70 bis 20 Gewichtsteilen eines Polybutandioladipats oder eines Polycaprolactondiols, jeweils mit einer OH-Zahl von 112,2 bis 46,7, entsprechend einem mittleren Molekulargewicht $\overline{M}_n$ von 1000 bis 2400, bevorzugt einer OH-Zahl von 62,3 bis 46,7, entsprechend einem mittleren Molekulargewicht $\overline{M}_n$ von 1800 bis 2400, 1,6-Hexamethylendiisocyanat in einem Äquivalenzverhältnis von 2,3:1,0 bis 6,2:1,0, bezogen auf das Polyolgemisch, und 1,4-Butandiol als Kettenverlängerungsmittel in einem Äquivalenzverhältnis von 1,3:1,0 bis 5,2:1,0, bezogen auf das Polyolgemisch.

Die NCO-Kennzahl, gebildet aus dem mit 100 multiplizierten Quotienten der Äquivalenzverhältnisse von Isocyanatgruppen und der Summe der Hydroxylgruppen von Polyolgemisch und Kettenverlängerungsmittel, liegt bei 96 bis 99, was einen Unterschuß an Diisocyanat bedeutet.

Bei dem Polybutandioladipat handelt es sich um die hydroxylhaltigen Polymerisationsprodukte von Butandiol und Adipinsäure, das Polycaprolactondiol ist das hydroxylhaltige Polymerisationsprodukt des Caprolactons.

Vorzugsweise wird bei der kontinuierlichen Herstellung der erfindungsgemäßen Polyurethanformmassen gemäß dem Extruder- oder Bandverfahren ein Katalysator eingesetzt. Geeignete Katalysatoren sind nach dem Stand der Technik bekannte und übliche tertiäre Amirie, wie z.B. Triethylamin, Dimethylcyclohexylamin, N-Methylmorpholin, N,N'-Dimethyl-piperazin, 2-(Dimethylaminoethoxy)-ethanol, Diazabicyclo[2,2,2]octan und ähnliche sowie insbesondere organische Metallverbindunen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen. Ganz besonders bevorzugt sind Zinndioctat und Dibutylzinndilaurat.

Die erfindungsgemäßen Polyurethanformmassen enthalten keinerlei Weichmacher. Neben den TPU-Komponenten und gegebenenfalls Katalysatoren können auch andere Hilfsmittel und Zusatzstoffe zugesetzt werden. Genannt seien beispielsweise Gleitmittel, wie Fettsäureester, deren Metallseifen, Fettsäureamide und Silikonverbindungen, Antiblockmittel, Inhibitoren, Stabilisatoren gegen Hydrolyse, Licht, Hitze und Verfärbung, Flammschutzmittel, Farbstoffe, Pigmente, anorganische und organische Füllstoffe und Verstärkungsmittel, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polurethane, Teil 1 und 2, Interscience Publishers 1962 bzw. 1964, R. Gächter, H. Müller (Ed.): Taschenbuch der Kunststoff-Additive, 3. Ausgabe, Hanser Verlag, München 1989 oder DE-A-29 01 774.

Das Foggingverhalten und die Kondensatbildung thermoplastischer Polyurethanformmassen kann deutlich verbessert werden, indem man das Granulat der Formmassen mit heißem Gas (z.B. Luft oder Stickstoff) durchströmt. Hierbei wird das Granulat in der Regel für 5 bis 20 h bei Temperaturen von 80 bis 110°C behandelt. Durch diese Maßnahme kann erreicht werden, daß die nach DIN 75 201 (16 h bei 120°C) bestimmten Mengen an Kondensat weniger als 1,5 mg/10 g betragen.

Die erfindungsgemäßen Formmasssen eignen sich zur Herstellung verschiedenster Formkörper, beispielsweise von Folien, insbesondere genarbten Sinterfolien. Pulverförmig kann die erfindungsgemäße Polyurethanformmasse nach dem bekannten "Powder-Slush-Verfahren" in beheizbaren Werkzeugen zu Häuten gesintert werden. Das dafür benötigte Pulver wird aus dem Granulat der erfindungsgemäßen Polyurethanformmasse durch Kaltmahlen gewonnen. Das Mahlgut wird in das an einer Seite offene, beheizbare Werkzeug eingebracht und auf der Innenwandung der beheizten Oberfläche innerhalb kurzer Zeit gesintert. Nach dem Abkühlen des Werkzeuges kann die Slush-Haut entnommen werden. Das Verfahren ist also analog demjenigen zur Herstellung von Armaturentafeln-Bespannungen aus PVC-Häuten. Beschrieben ist es beispielsweise in DE-A 39 32 923 als "Powder-Slush-Verfahren".

Wegen des scharfen Schmelzpunktes bei 180°C und des Vorliegens einer bereits ab dem Schmelzpunkt niedrigviskosen Schmelze sintert das Pulver auf der Innenwandung des beheizten Werkzeuges bereits innerhalb kurzer Zeit zu einer homogenen, von kleinen Löchern und von Blasen freien Folie, die aufgrund der hohen Kristallisationsfreudigkeit der erfindungsgemäßen Formmasse schon nach dem Abkühlen auf nur 100°C ohne Verzug geformt werden kann. Alle diese Faktoren machen das Sinterverfahren mit der erfindungsgemäßen Formmasse besonders wirtschaftlich.

Die aus dieser Polyurethanformmasse hergestellte Sinterfolie besitzt eine hohe Zugfestigkeit sowie eine hervorragende Einreiß- und Weiterreißfestigkeit. Sie hat einen weichen und lederartigen Griff und neigt auch bei hellen Einfärbungen bei Lichteinwirkung weder zur Vergilbung noch zu einer Veränderung des Glanzgrades.

Das Narbenbild verändert sich bei der Heißlichtalterung (110 bis 120°C) nicht; bei der Wärmealterung durch Lagerung auf einem Gitterrost bei 130°C tritt ebenfalls keine Veränderung auf.

Die aus den erfindungsgemäßen Polyurethanformmassen hergestellten Sinterfolien eignen sich beispielsweise für den Einsatz als Oberflächenverkleidung in Verkehrsmitteln, z.B. Flugzeugen, Schiffen, Eisenbahnen oder Kraftfahrzeugen, insbesondere als Verkleidung für Instrumententafeln, da die Folien hervorragend auf dem Polyurethan-Hinterschaum der Instrumententafel haften. Gegenstand der vorliegenden Erfindung ist deshalb auch die Verwendung der erfindungsgemäßen Folien als Oberflächenverkleidung für Instrumententafeln in Verkehrsmitteln, insbesondere in Kraftfahrzeugen.

## Beispiele

## Beispiel 1

Zusammensetzung der Mischung:

70,00 Gewichtsteile Polycarbonatdiol mit $\overline{M}_n$=2000
30,00 Gewichtsteile Polycaprolactondiol mit $\overline{M}_n$=2000
30,10 Gewichtsteile Hexamethylendiisocyanat
11,70 Gewichtsteile 1,4-Butandiol

Herstellungsverfahren:

Die Herstellung erfolgte im Einstufenverfahren. Die Polycarbonatdiol, Polycaprolactondiol, Hexamethylendiisocyanat und 1,4-Butandiol wurden auf 90°C vorgewärmt, in einem Extruder polymerisiert und anschließend granuliert. Danach wurde das Granulat in einem Kompoundierschritt mit den üblichen Additiven versetzt und abschließend unter Kühlung mit flüssigem Stickstoff zu feinem Pulver mit einer Kornverteilung von 50 bis 400 $\mu$m gemahlen.

## Beispiel 2

Zusammensetzung der Mischung:

70,00 Gewichtsteile Polycarbonatdiol mit $\overline{M}_n$=2000
34,00 Gewichtsteile Polybutandioladipat mit $\overline{M}_n$=2250

30,20 Gewichtsteile Hexamethylendiisocyanat
11,70 Gewichtsteile 1,4-Butandiol

Herstellungsverfahren:

Die Herstellung erfolgte im Einstufenverfahren. Polycarbonatdiol, Polybutandioladipat, Hexamethylendiisocyanat und 1,4-Butandiol wurden auf 90°C vorgewärmt, in einem Extruder polymerisiert und anschließend granuliert. Danach wurde das Granulat in einem Kompoundierschritt mit Additiven (UV-Stabilisator, Antioxidans, Trennmittel) versetzt und abschließend unter Kühlung mit flüssigem Stickstoff zu feinem Pulver mit einer Kornverteilung von 50 bis 500 um gemahlen.

Das in Beispiel 1 und 2 erhaltene Material sowie ein nach DE-C 42 03 307, Beispiel 1 hergestelltes Vergleichsmaterial wurden einem Fogging-Test gemäß DIN 75 201 ("Bestimmung des Foggingverhaltens von Werkstoffen der Kraftfahrzeug-Innenausstattung") unterzogen. Außerdem wurde der Restglanz nach dreistündigem Tempern bei 100°C bestimmt. Die Resultate sind in Tabelle 1 zusammengefaßt.

Tabelle 1

|  | Restglanz (%) | Kondensat (mg)* |
|---|---|---|
| Vergleichsbeispiel 1 (gemäß DE-C 42 03 307) | 88 | 4,4 |
| Beispiel 1 | 93 | 3,0 |
| Beispiel 2 | 92 | 2,9 |
| Beispiel 3a |  | 1,4 |
| Beispiel 3b |  | 1,0 |

* Der kondensierbare Anteil wurde über 16 h bei 120°C ermittelt.

**Beispiel 3**

TPU-Granulat aus Beispiel 2 wurde mit 90°C warmer Luft durchströmt (gestrippt).

a) 8 Stunden bei 90°C
b) 16 Stunden bei 90°C

Anschließend wurde das Material einem Fogging-Test gemäß DIN 75 201 unterzogen. Die Resultate sind in Tabelle 1 wiedergegeben.
Die Ergebnisse verdeutlichen, daß das erfindungsgemäße Produkt den von der Kraftfahrzeugindustrie geforderten Restglanz >90 % aufweist und weniger Kondensat abgibt als das Material gemäß Vergleichsbeispiel 1.

**Patentansprüche**

1. Thermoplastische in Form von Sinterpulver verarbeitbare Polyurethanformmasse erhältlich durch Umsetzung von 100 Gewichtsteilen eines Polyolgemisches aus

30 bis 80 Gewichtsteilen eines aliphatischen Polycarbonatdiols mit einem mittleren Molekulargewicht $\overline{M}_n$ von 1000 bis 2200 und

70 bis 20 Gewichtsteilen eines Polybutandioladipats oder eines Polycaprolactondiols mit einem mittleren Molekulargewicht $\overline{M}_n$ von 1000 bis 2400 und

1,6-Hexamethylendiisocyanat in einem Äquivalenzverhältnis von 2,3:1,0 bis 6,2:1,0, bezogen auf das Polyolgemisch, und

1,4-Butandiol als Kettenverlängerungsmittel in einem Äquivalenzverhältnis von 1,3:1,0 bis 5,2:1,0, bezogen auf das Polyolgemisch,

wobei die NCO-Kennzahl, gebildet aus dem mit 100 multiplizierten Quotienten der Äquivalenzverhältnisse von Isocyanatgruppen und der Summe der Hydroxylgruppen von Polyolgemisch und Kettenverlängerungsmittel, 96 bis 99 beträgt.

2. Verfahren zur kontinuierlichen Herstellung der Formmassen gemäß Anspruch 1, bei dem die Umsetzung der Polyurethankomponenten in Gegenwart eines Katalysators durchgeführt wird.

**3.** Formkörper aus den Polyurethanformmassen gemäß Anspruch 1.

**4.** Folien aus den Polyurethanformmassen gemäß Anspruch 1.

**5.** Verwendung der Formkörper gemäß Anspruch 3 als Oberflächenverkleidung in Verkehrsmitteln.

## Claims

**1.** Thermoplastic polyurethane moulding composition that can be processed in the form of sintering powder, obtainable by reaction of
100 parts by weight of a polyol mixture of
30 to 80 parts by weight of an aliphatic polycarbonate diol with an average molecular weight $\overline{M}_n$ of 1000 to 2200, and
70 to 20 parts by weight of a polybutane diol adipate or a polycaprolactone diol with an average molecular weight $\overline{M}_n$ of 1000 to 2400, and
1,6-hexamethylene diisocyanate in an equivalence ratio of 2.3 : 1.0 to 6.2 : 1.0, based on the polyol mixture, and
butane-1,4-diol as chain extender in an equivalence ratio of 1.3 : 1.0 to 5.2 : 1.0, based on the polyol mixture,
wherein the NCO characteristic, formed from the quotient, multiplied by 100, of the equivalence ratios of isocyanate groups and the sum of the hydroxyl groups of polyol mixture and chain extender, is 96 to 99.

**2.** Process for the continuous preparation of moulding compositions according to claim 1, wherein the reaction of the polyurethane components is carried out in the presence of a catalyst.

**3.** Moulded articles of the polyurethane moulding compositions according to claim 1.

**4.** Films of the polyurethane moulding compositions according to claim 1.

**5.** Use of the moulded articles according to claim 3 as surface trim in means of transport.

## Revendications

**1.** Matière à mouler en polyuréthanne apte au travail thermoplastique sous la forme de poudre à fritter, obtenue par réaction de 100 parties en poids d'un mélange de polyols consistant en
30 à 80 parties en poids d'un polycarbonatediol aliphatique au poids moléculaire moyen $\overline{M}_n$ de 1000 à 2200, et
70 à 20 parties en poids d'un adipate de polybutanediol ou d'un polycaprolactonediol au poids moléculaire moyen $\overline{M}_n$ de 1000 à 2400, et
du 1,6-hexaméthylènediisocyanate en quantité correspondant à un rapport de 2,3:1,0 à 6,2:1,0 entre les équivalents du diisocyanate et les équivalents du mélange de polyols, et
du 1,4-butanediol servant d'agent d'allongement des chaînes, en quantité correspondant à un rapport de 1,3:1,0 à 5,2:1,0 entre les équivalents de 1,4-butanediol et les équivalents du mélange de polyols,
avec un indice de NCO, défini par le quotient du rapport des équivalents de groupes isocyanate et de la somme des groupes hydroxy du mélange de polyols et de l'agent d'allongement des chaînes, multiplié par 100, qui va de 96 à 99.

**2.** Procédé pour la préparation continue des matières à mouler selon la revendication 1, selon lequel on fait réagir les composants du polyuréthanne en présence d'un catalyseur.

**3.** Objets moulés consistant en les matières à mouler en polyuréthanne selon la revendication 1.

**4.** Feuilles consistant en les matières à mouler en polyuréthanne selon la revendication 1.

**5.** Utilisation des objets moulés selon la revendication 3 pour l'habillage de surface de véhicules.